# FASCICULE DE BREVET EUROPEEN

(11) **EP 0 406 091 B1**
(45) Date de publication et mention de la délivrance du brevet: **01.09.1993**
(21) Numéro de dépôt: 90401805.8
(22) Date de dépôt: 25.06.1990
(51) Int. Cl.: B64C 25/12

(54) **Train d'atterrissage relevable**
Einziehfahrwerk
Retractable landing gear

(30) Priorité: 27.06.1989 FR 8908531
(43) Date de publication de la demande: 02.01.1991
(73) Titulaire: MESSIER - BUGATTI, F-99120 Montrouge (FR)
(72) Inventeur: Woerner, Pierre, F-92260 Montenay aux Roses (FR); Hainaut, Jean-Pierre, F-94510 La Queue en Brie (FR)
(74) Mandataire: Fruchard, Guy

(56) Documents cités:
- DE-C- 722 977
- FR-A- 2 493 264

## Description

La présente invention concerne un train d'atterrissage relevable pour un avion.

On connaît des trains d'atterrissage avec amortisseur direct c'est-à-dire comportant un amortisseur dont le caisson est relié à la structure d'avion tandis que les roues sont portées par la tige coulissante. Les trains d'atterrissage avec amortisseur direct doivent être verticaux ou avec un angle d'inclinaison faible faute de quoi les efforts tranchants sur la tige coulissante sont trop importants et empêchent un coulissement de celle-ci.

On connaît également du document FR-A-2.493.264 un amortisseur comportant un caisson fixé au panneau pivotant de façon à pivoter par rapport à celui-ci autour d'un axe de basculement sensiblement perpendiculaire à une direction d'avancement de la structure d'avion, et une tige coulissante montée pour coulisser dans le caisson et reliée à son extrémité inférieure à un organe portant un train de roues ; des moyens d'accouplement ayant une première extrémité reliée de façon articulée au panneau pivotant autour d'un axe parallèle à l'axe de basculement de l'amortisseur ; et des moyens de maintien et de relevage de l'amortisseur ayant une première extrémité reliée à la structure de l'avion pour pivoter autour d'un axe perpendiculaire à l'axe de basculement du caisson.

Selon l'invention on prévoit un amortisseur du type décrit dans ce document, caractérisé en ce que les moyens d'accouplement ont une seconde extrémité reliée de façon articulée à la tige coulissante au voisinage du train de roues autour d'un axe parallèle à l'axe de basculement de l'amortisseur ; et en ce que les moyens de maintien et de relevage de l'amortisseur sont montés pour pivoter autour d'un axe de basculement parallèle à l'axe de basculement du caisson de l'amortisseur et ont une seconde extrémité reliée par une liaison articulée au caisson de l'amortisseur. Ainsi, même pour une position très inclinée de l'amortisseur vers l'arrière, les efforts tranchants exercés par le train de roues lors de son appui sur le sol sont supportés par les moyens d'accouplement et n'empêchent pas un coulissement satisfaisant de la tige coulissante dans le caisson de l'amortisseur.

Selon un mode de réalisation avantageux de l'invention, les moyens d'accouplement ont une longueur réglable. Ainsi, lors du relevage, l'amortisseur est ramené dans une position sensiblement verticale avant d'être rétracté dans la structure de l'avion et a ainsi un encombrement longitudinal réduit.

Selon encore un mode de réalisation de l'invention, l'axe de basculement du caisson de l'amortisseur est sensiblement colinéaire à l'axe de basculement des moyens de maintien et de relevage. Ainsi, on minimise les variations de l'angle de carrossage des roues lors de l'enfoncement de l'amortisseur.

D'autres caractéristiques et avantages de l'invention apparaîtront encore à la lecture de la description qui suit d'un mode de réalisation particulier non limitatif de l'invention en liaison avec les dessins ci-joints parmi lesquels :

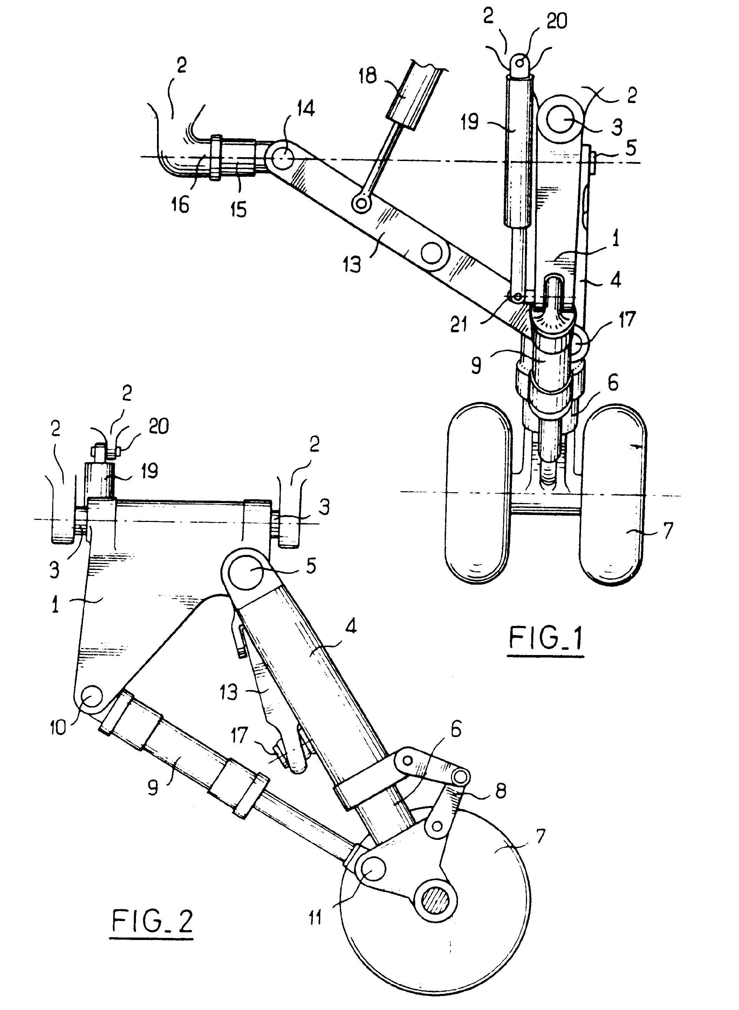

- la figure 1 est une vue en élévation de l'avant d'un train d'atterrissage selon l'invention,
- la figure 2 est une vue en élévation de côté d'un train d'atterrissage selon l'invention.

En référence aux figures, le train d'atterrissage selon l'invention comporte un panneau 1 monté pour pivoter sur une structure d'avion 2 autour d'un axe de relevage 3 s'étendant de préférence selon une direction longitudinale de l'avion.

Le caisson 4 d'un amortisseur est fixé au panneau pivotant 1 de façon à pivoter par rapport à celui-ci autour d'un axe de basculement 5 perpendiculaire au panneau pivotant 1 et à la direction d'avancement de la structure d'avion. L'axe de basculement 5 est immédiatement adjacent à l'axe de relevage 3 du panneau pivotant.

Une tige coulissant 6 est montée pour coulisser dans le caisson 4 et porte à son extrémité inférieure un train de roues 7. D'une façon conventionnelle, la tige coulissante 6 est reliée au caisson 4 par un compas 8.

Un vérin d'accouplement télescopique 9 a une première extrémité reliée de façon articulée au panneau pivotant 1 autour d'un axe 10 parallèle à l'axe de basculement 5 de l'amortisseur, et une seconde extrémité reliée de façon articulée à la tige coulissante 6 au voisinage du train de roues 7 autour d'un axe 11 également parallèle à l'axe de basculement de l'amortisseur.

Une contre fiche repliable 13 s'étend transversalement au panneau pivotant 1 et à son extrémité supérieure reliée à la structure d'avion 2 pour pivoter d'une part, par l'intermédiaire d'une douille 15, autour d'un axe 16 parallèle à l'axe de basculement 5 du caisson de l'amortisseur et de préférence colinéaire à celui-ci, et d'autre part, autour d'un axe 14 perpendiculaire à cet axe de basculement. A son extrémité inférieure, la contrefiche repliable 13 est fixée de façon articulée au caisson 4 de l'amortisseur par une rotule 17.

Par ailleurs, la contrefiche repliable 13 est reliée à un vérin de verrouillage 18. Un vérin de relevage 19 à son extrémité supérieure fixée à la structure 2 de l'avion pour pivoter autour d'un axe 20 parallèle à l'axe de relevage 3 de la plaque pivotante 1, et une extrémité inférieure reliée de façon pivotante à la plaque pivotante 1 au moyen d'un axe 21 également parallèle à l'axe de relevage 3 de la plaque pivotante 1.

Le train d'atterrissage selon l'invention est représenté en position d'utilisation. Dans cette position, la contrefiche 13 est verrouillée dans une position rectiligne pour que la plaque pivotante 1 soit dans une position sensiblement verticale. Le vérin d'accouplement 9 est en position allongée de sorte que le train de roues 7 est fortement déporté vers l'arrière. Dans cette position, lorsque les roues prennent appui sur le sol, l'effort tranchant sur la tige coulissante 6 est absorbé par le vérin d'accouplement 9. Après le décollage de l'avion, le vérin d'accouplement 9 est rétracté afin de ramener la tige coulissante 6 dans une position sensiblement verticale puis le vérin de verrouillage 18 de la contrefiche 13 est manoeuvré pour désaligner les deux parties de la contrefiche 13, et enfin le vérin de relevage 19 est manoeuvré de sorte que le train d'atterrissage est relevé en occupant un encombrement qui n'est pas sensiblement supérieur aux trains d'atterrissage habituels dans lesquels l'amortisseur est directement relié à la structure de l'avion.

Bien entendu l'invention est susceptible de variantes de réalisation qui apparaîtront à l'homme de métier sans sortir du cadre de l'invention. En particulier, lorsque l'espace le permet, le vérin d'accouplement 9 peut être remplacé par une barre d'accouplement rigide, l'amortisseur restant en position inclinée lors du relevage.

De même, la contrefiche repliable 13 peut être remplacé par un vérin de relevage ou être associée à un vérin unique assurant à la fois son déverrouillage et son relevage.

## Revendications

1. Train d'atterrissage relevable comportant un panneau pivotant (1) équipé de moyens pour être fixé à une structure d'avion (2) de façon à pivoter autour d'un axe de relevage (3) ; un amortisseur comportant un caisson (4) fixé au panneau pivotant (1) de façon à pivoter par rapport à celui-ci autour d'un axe de basculement (5) sensiblement perpendiculaire à une direction d'avancement de la structure d'avion, et une tige coulissante (6) montée pour coulisser dans le caisson (4) et reliée à son extrémité inférieure à un organe portant un train de roues (7); des moyens d'accouplement (9) ayant une première extrémité reliée de façon articulée au panneau pivotant (1) autour d'un axe (10) parallèle à l'axe de basculement (5) de l'amortisseur ; et des moyens de maintien et de relevage (13) de l'amortisseur ayant une première extrémité reliée à la structure de l'avion (2) pour pivoter autour d'un axe (14) perpendiculaire à l'axe de basculement (5) du caisson, caractérisé en ce que les moyens d'accouplement (9) ont une seconde extrémité reliée de façon articulée à la tige coulissante (6) au voisinage du train de roues (7) autour d'un axe (11) parallèle à l'axe de basculement (5) de l'amortisseur ; et en ce que les moyens de maintien et de relevage (13) de l'amortisseur sont montés pour pivoter autour d'un axe de basculement (16) parallèle à l'axe de basculement (5) du caisson de l'amortisseur et ont une seconde extrémité reliée par une liaison articulée (17) au caisson (4) de l'amortisseur.

2. Train d'atterrissage relevable selon la revendication 1, caractérisé en ce que les moyens d'accouplement (9) ont une longueur réglable.

3. Train d'atterrissage relevable selon la revendication 1 ou la revendication 2, caractérisé en ce que l'axe de basculement (5) du caisson de l'amortisseur est colinéaire à l'axe de basculement (16) des moyens de maintien et de relevage.

## Patentansprüche

1. Einziehbares Fahrwerk, umfassend eine Schwenkplatte (1), die mit Mitteln zu ihrer Befestigung an einem Flugzeugkörper (2) versehen ist derart, daß sie um eine Hubachse (3) schwenkbar ist; einen Stoßdämpfer mit einem Zylinder (4), der an der Schwenkplatte (1) derart befestigt ist, daß er relativ zu dieser um eine Schwenkachse (5) schwenkbar ist, die im wesentlichen senkrecht zur Bewegungsrichtung des Flugzeugkörpers gerichtet ist, und mit einer Gleitstange (6), die verschiebbar in dem Zylinder (4) gelagert und an ihrem unteren Ende mit einem Radsatz (7) tragenden Organ verbunden ist; eine Kupplungseinrichtung (9) mit einem ersten Ende, das an der Schwenkplatte (1) um eine zur Schwenkachse des Stoßdämpfers parallele Achse schwenkbar angelenkt ist; und eine Halte- und Hubeinrichtung (13) für den Stoßdämpfer mit einem ersten Ende, das mit dem Flugzeugkörper (2) um eine Achse (14) schwenkbar verbunden ist, die senkrecht zur Schwenkachse (5) des Zylinders gerichtet ist, dadurch **gekennzeichnet,** daß die Kupplungseinrichtung (9) ein zweites Ende hat, das mit der Gleitstange (6) nahe dem Radsatz (7) um eine Achse schwenkbar verbunden ist, die parallel zur Schwenkachse (5) des Stoßdämpfers gerichtet ist; und daß die Halte- und Hubeinrichtung (13) für den Stoßdämpfer um eine zur Schwenkachse (5) des Zylinders des Stoßdämpfers parallele Schwenkachse (16) schwenkbar gelagert ist und ein zweites Ende hat, das über eine Gelenkverbindung (17) mit dem Zylinder (4) des Stoßdämpfers verbunden ist.

2. Einziehbares Fahrgestell nach Anspruch 1, dadurch **gekennzeichnet,** daß die Kupplungseinrichtung (9) eine einstellbare Länge hat.

3. Einziehbares Fahrwerk nach Anspruch 1 oder 2, dadurch **gekennzeichnet,** daß die Schwenkachse (5) des Zylinders des Stoßdämpfers kolinear zur Schwenkachse (16) der Halte- und Hubeinrichtung ist.

## Claims

1. Raisable landing gear comprising a pivoting panel (1) fitted with means for fixing to an aircraft structure (2) so as to pivot about a raising axis (3); a shock absorber comprising a strut (4) fixed to the pivoting panel (1) so as to pivot relative thereto about a tilt axis (5) which is substantially perpendicular to a forward travel direction of the aircraft structure, and a sliding rod (6) mounted to slide inside the strut (4) and connected at a bottom end to a member carrying a set of wheels (7); coupling means (9) having a first end hinged to the pivoting panel (1) about an axis (10) which is parallel to the tilt axis (5) of the shock absorber; and shock absorber raising and holding means (13) having a first end connected to the aircraft structure (2) to pivot about an axis (14) perpendicular to said tilt axis (5) of the strut characterized in that the coupling means (9) have a second end hinged to the sliding rod (6) in the vicinity of the set of wheels (7) about an axis (11) which is parallel to the tilt axis (5) of the shock absorber ; and in that the shock absorber raising and holding means (13) are mounted to pivot about a tilt axis (16) which is parallel to the tilt axis (5) of the shock absorber strut, and have a second end connected via a hinged connection (17) to the strut (4) of the shock absorber.

2. Raisable landing gear according to claim 1, wherein the coupling means (9) are adjustable in length.

3. Raisable landing gear according to claim 1, wherein the tilt axis (5) of the shock absorber strut is colinear with the tilt axis (16) of the raising and holding means.
